# FASCICULE DE BREVET EUROPEEN

(11) **EP 3 087 020 B1**
(45) Date de publication et mention de la délivrance du brevet: **27.03.2019**
(21) Numéro de dépôt: 14830536.0
(22) Date de dépôt: 16.12.2014
(51) Int. Cl.: B65H 19/18, B29C 65/00, B29C 65/74, B29C 65/08

(54) **PROCEDE DE RABOUTAGE DE DEUX ARTICLES THERMOFUSIBLES SOUS FORME DE BANDES OU DE NAPPES, ET MODULE DE RABOUTAGE POUR LA MISE EN OEUVRE DUDIT PROCEDE**
VERFAHREN ZUM VERBINDEN DER ENDEN ZWEIER HEISSSCHMELZELEMENTE IN DER FORM VON STREIFEN ODER BAHNEN UND ENDVERBINDUNGSMODUL ZUR DURCHFÜHRUNG DES VERFAHRENS
METHOD FOR JOINING TOGETHER THE ENDS OF TWO HOT-MELT ITEMS IN THE FORM OF STRIPS OR PLIES, AND END-JOINING MODULE FOR IMPLEMENTING SAID METHOD

(30) Priorité: 26.12.2013 FR 1363609
(43) Date de publication de la demande: 02.11.2016
(73) Titulaire: Spoolex, 42230 Roche La Moliere (FR)
(72) Inventeur: LASSALLE, Luc, F-42100 Saint-Etienne (FR); BENOIT, Christophe, F-42800 Genilac (FR); PAULET, Guillaume, F-43240 Saint Just Malmont (FR)
(74) Mandataire: Cabinet Laurent & Charras
(86) Numéro de dépôt international: PCT/FR2014/053372
(87) Numéro de publication internationale: WO 2015/097364

(56) Documents cités:
- EP-A1- 0 786 409

## Description

### DOMAINE TECHNIQUE

La présente invention concerne un procédé de raboutage de deux articles thermofusibles présentés sous forme de bandes ou de nappes. L'invention concerne également un module de raboutage pour la mise en oeuvre dudit procédé.

Le raboutage est une technique bien connue de l'Homme du Métier qui consiste notamment à rendre solidaires deux bandes ou nappes d'un matériau thermofusible. L'une des difficultés principales du raboutage réside dans le fait d'obtenir un raboutage parfait, sans rebord ou bourrelet par exemple.

L'invention trouve notamment une application avantageuse pour les constructeurs ou utilisateurs de machines textiles, mettant en oeuvre des bobines de dévidage de tissu par exemple. En effet, lorsqu'une bobine de dévidage est vide, il est nécessaire de la remplacer par une nouvelle bobine tout en conservant la continuité du tissu par le raboutage de l'extrémité finale de la bobine vide, avec l'extrémité initiale de la nouvelle bobine.

### ETAT ANTERIEUR DE LA TECHNIQUE

Le brevet FR 2 972 433 divulgue un dispositif de raboutage qui comprend notamment une première station de travail apte à souder par ultrasons et à découper deux épaisseurs d'articles, et une deuxième station de travail apte à laminer par ultrasons.

Un tel dispositif est destiné à réaliser une opération de raboutage de l'extrémité finale d'un article issu du déroulement d'une première bobine de dévidage, avec l'extrémité initiale d'un article issu du déroulement d'une deuxième bobine de dévidage afin de former un seul article continu.

Le premier article issu de la première bobine de dévidage est déroulé en passant successivement par la première et la deuxième station de travail. Pour l'opération de raboutage, le second article à rabouté est tendu et superposé au premier article au niveau de la première station travail. Ces deux articles sont ensuite maintenus en position et simultanément découpés et soudés par l'intermédiaire de moyens de coupe soudante à sonotrode de la première station de travail. Cette opération de coupage-soudage permet de joindre l'extrémité finale de la première bobine à l'extrémité initiale de la deuxième bobine.

La zone de soudure et de découpe est légèrement déformée par une remise partielle à plat et forme ainsi une sorte de bec dont la résistance par soudure est fragile et précaire. L'étape suivante consiste alors à laminer ledit bec. Une fois laminés, les deux articles sont confondus pour n'en former qu'un seul.

Cet état de la technique donne de bons résultats en termes de produits finis, mais, le module mettant en oeuvre le procédé susmentionné ne permet qu'un seul cycle de raboutage. De plus, l'opération de raboutage est lente et nécessite l'intervention d'un opérateur.

En effet, le dispositif permet le raboutage d'une première bobine de dévidage à une deuxième bobine de dévidage. Cependant, lorsque la deuxième bobine de dévidage est vide, il n'est pas possible de rabouter automatiquement l'extrémité finale de ladite deuxième bobine à l'extrémité initiale d'une autre première bobine. Le dispositif ne permet qu'un seul cycle de raboutage.

Pour réaliser un nouveau cycle de raboutage, il devient nécessaire de faire intervenir un opérateur qui commence par stopper le déroulage du dispositif. L'opérateur doit ensuite découper l'article issu de la deuxième bobine, qui était en train de se dérouler, pour le positionner sous la première station de travail. L'opérateur approvisionne ensuite une autre « première » bobine, et positionne l'article issu de cette autre première bobine sous la première station de travail, en superposition sur l'article de la deuxième bobine de dévidage. L'opérateur met en tension les deux articles et relance le dispositif de raboutage.

Ces opérations sont à réaliser autant de fois qu'il y a de cycle de raboutage. Ces opérations sont lentes et nécessitent une intervention lourde de l'opérateur, qui de plus intervient au niveau de la station de coupe et dans un espace souvent confiné entre des rouleaux de renvoi, rendant la tâche plus fastidieuse et non exempt de risques de blessures pour l'opérateur.

Le document EP 0 786 409 décrit une autre solution technique antérieure pertinente.

### EXPOSE DE L'INVENTION

L'un des buts de l'invention est de fournir un procédé de raboutage plus efficace que celui de l'état de la technique et permettant d'effectuer en continu plusieurs cycles de raboutage. Un autre objectif de raboutage est de fournir un procédé qui soit rapide avec un rendement optimal, et qui soit plus sécuritaire pour les opérateurs.

A cet effet, il a donc été mis au point un procédé de raboutage de deux articles thermofusibles présentés sous forme de bandes ou de nappes. Le procédé est mis en oeuvre dans une installation déroulant, selon un chemin de déroulage, un premier article enroulé autour d'une première bobine de dévidage.

Conformément à l'invention, le procédé comprend au moins les étapes consistant à :
- approvisionner l'installation avec une deuxième bobine de dévidage autour de laquelle est enroulé un second article ;
- déplacer automatiquement un premier rouleau de renvoi pour déplacer automatiquement un tronçon tendu du second article jusque dans un plan de raboutage situé hors du chemin de déroulage du premier article ;
- déplacer automatiquement un troisième rouleau de renvoi pour déplacer automatiquement un tronçon tendu du premier article jusqu'au niveau du plan de raboutage, et de sorte à mettre en regard, face contre face et bord à bord, le tronçon du premier article avec le tronçon du second article ;
- mettre automatiquement en contact bord à bord les deux tronçons, et réaliser automatiquement un coupage-soudage transversal des deux tronçons pour réaliser l'opération de raboutage en tant que telle.

Le procédé de raboutage permet ainsi de joindre d'une manière optimale, rapide et automatique deux articles bout à bout. Ce procédé de raboutage est très rapide et permet une augmentation du rendement de raboutage. En effet, les étapes consistant à approvisionner une deuxième bobine et à déplacer un tronçon tendu du second article dans un plan de raboutage peuvent se faire en temps masqué sur le déroulage du premier article. Le déroulage du premier article est de préférence arrêté uniquement lorsqu'il devient nécessaire de déplacer un tronçon dudit premier article au niveau du plan de raboutage. D'une manière encore plus avantageuse, le déroulage de l'article est arrêté uniquement lorsqu'il convient de mettre en contact les deux articles et de les couper-souder. C'est-à-dire que l'étape consistant à déplacer un tronçon dudit premier article au niveau du plan de raboutage peut aussi se faire en temps masqué sur le déroulage dudit premier article.

Ce procédé de raboutage est très avantageux car il permet la réalisation en continu de plusieurs cycles de raboutage. En effet, le procédé est réversible puisque le plan de raboutage dans lequel, ou au niveau duquel sont déplacés les tronçons à rabouter est déporté du chemin de déroulage de l'installation. Cette caractéristique permet de laisser libre le déroulage du premier ou du deuxième article, en mettant en oeuvre des moyens pour déplacer automatiquement dans le plan de raboutage un tronçon de chaque article à rabouter. Le procédé est alors réversible. Plus précisément, lorsque la deuxième bobine est vide, celle-ci devient la première bobine de dévidage, et il suffit de reprendre les étapes du procédé pour effectuer le raboutage avec une autre deuxième bobine.

Le rendement est très largement amélioré et l'intervention d'un opérateur est très nettement diminuée, voire notamment supprimée.

En effet, pratiquement toutes les étapes sont faites rapidement et automatiquement. Il résulte de cela un gain de temps et de rendement, ainsi qu'une sécurité accrue pour l'opérateur qui n'est plus contraint à travailler dans un espace confiné et à mettre les mains au milieu d'une station de coupe.

Il peut être envisagé un procédé complètement autonome, sans l'intervention d'un opérateur, en prévoyant que les nouvelles bobines à rabouter soient éjectées et approvisionnées automatiquement, et en temps masqué par rapport au déroulage de l'article en cours, par un rail et un poussoir par exemple, ou par toute autre technique robotisée.

Selon des formes de réalisation différentes du procédé de raboutage selon l'invention, celui-ci peut comprendre une étape consistant à :
- mettre automatiquement en tension l'article rabouté issu de la deuxième bobine de dévidage en tirant sur ledit article, en aval de la soudure résultant du raboutage, de manière à déplacer ladite soudure vers une station de travail.

A partir de cette étape plusieurs étapes sont ensuite possibles. Par exemple, la station de travail est apte à réaliser un laminage automatique de la soudure dudit article rabouté issu de la deuxième bobine de dévidage.

De cette manière, le rendu du raboutage est optimal, et la soudure laminée est plus résistante et ne forme aucun rebord.

Une autre configuration possible est que la station de travail est apte à appliquer automatiquement une bande adhésive ou un marquage permettant de repérer la zone raboutée sur au moins une partie de la soudure, et avantageusement tout le long de celle-ci. Cette bande adhésive peut par exemple contribuer à la stabilité finale du raboutage et renforcer la soudure, et/ou simplement réaliser un marquage visuel de la soudure.

L'invention concerne également un module de raboutage pour la mise en oeuvre du procédé de raboutage décrit ci-avant. Le module de raboutage est destiné à être mis en oeuvre dans une installation déroulant, selon un chemin de déroulage, un premier article enroulé autour d'une première bobine de dévidage.

Selon l'invention, le module comprend au moins :
- des premiers moyens de mise en tension d'un second article issu d'une deuxième bobine de dévidage, lesdits premiers moyens étant situés dans un plan de raboutage situé hors du chemin de déroulage du premier article ;
- un premier rouleau de renvoi apte à renvoyer le second article tendu vers les premiers moyens de mise en tension, ledit premier rouleau de renvoi étant déplaçable entre une position de repos, et une position de raboutage dans laquelle il est apte à positionner un tronçon tendu du second article dans le plan de raboutage, ledit tronçon étant situé entre ledit premier rouleau de renvoi et lesdits premiers moyens de mise en tension ;
- un deuxième rouleau de renvoi disposé sur le chemin de déroulage de l'installation, au niveau du plan de raboutage et du même côté que le premier rouleau de renvoi par rapport audit plan de raboutage, ledit deuxième rouleau étant apte à renvoyer le premier article issu de la première bobine de dévidage vers une station de travail ;
- un troisième rouleau de renvoi apte à renvoyer le premier article issu de la première bobine de dévidage vers le deuxième rouleau de renvoi, ledit troisième rouleau de renvoi étant disposé de l'autre côté du plan de raboutage, et de l'autre côté du premier article par rapport audit deuxième rouleau de renvoi, ledit troisième rouleau étant déplaçable entre une position initiale, et une position de raboutage dans laquelle il est situé au niveau du plan de raboutage, entre le premier rouleau de renvoi dans sa position de raboutage et les premiers moyens de mise en tension dudit second article, de manière à permettre le positionnement d'un tronçon du premier article en regard, face à face et bord à bord, avec le tronçon du second article lorsque le premier rouleau est dans la position de raboutage ;
- des moyens de coupage-soudage déplaçables dans le plan de raboutage, entre une position de repos, et une position de coupage-soudage dans laquelle ils sont aptes à mettre en contact bord à bord les deux tronçons, et à réaliser un coupage-soudage transversal desdits deux tronçons pour réaliser l'opération de raboutage en tant que telle ;
- une station de travail, apte à laminer la soudure résultant de l'opération de raboutage, ou à appliquer une bande adhésive ou un marquage permettant de repérer la zone raboutée sur au moins une partie de ladite soudure, la station de travail étant disposée en aval du deuxième rouleau de renvoi sur le chemin de déroulage de l'article rabouté.

De cette manière, le module selon l'invention permet la mise en oeuvre du procédé selon l'invention.

En effet, l'opérateur approvisionne l'installation avec la deuxième bobine de dévidage autour de laquelle est enroulé le second article à rabouter au premier article. Lors de cette étape, l'opérateur fixe l'extrémité initiale du second article aux premiers moyens de mise en tension qui sont situés dans un plan de raboutage situé hors du chemin de déroulage du premier article. Ces opérations sont effectuées en temps masqué par rapport au déroulage du premier article, par un opérateur ou bien d'une manière totalement automatisée.

Le second article est donc tendu et est positionné sur un premier rouleau de renvoi disposé en aval desdits premiers moyens de mise en tension.

Le module permet alors le positionnement d'un tronçon du second article dans le plan de raboutage, par le déplacement du premier rouleau de renvoi jusqu'à sa position de raboutage. Lors de cette étape, le déroulage du premier article est toujours en cours.

A cette étape, le troisième rouleau de renvoi se déplace afin de mettre un tronçon du premier article dans le plan de raboutage en regard, face à face et bord à bord, avec le tronçon du second article. Lors de cette étape, le déroulage du premier article est toujours en cours.

Les moyens de coupage-soudage se déplacent ensuite vers leur position de coupage-soudage, et c'est seulement lorsque lesdits moyens de coupage-soudage viennent mettre en contact les deux articles face à face et bord à bord, que le déroulage du premier article est stoppé. Les deux articles en contact face à face et bord à bord sont ensuite coupés-soudés pour être raboutés.

Les moyens de coupage-soudage sont déplaçables de sorte à être escamotables pour ne pas gêner le déplacement et le positionnement des tronçons des articles à rabouter dans le plan de raboutage.

A cette étape, il est nécessaire de tendre l'article rabouté issu de la deuxième bobine de dévidage, et de reprendre le cycle normal de déroulage de l'article rabouté.

Le module permet également de tendre l'article rabouté issu de la deuxième bobine de dévidage afin de déplacer la soudure résultant du raboutage vers la station de travail avant de reprendre le cycle de déroulage normal. La station de travail est apte soit à effectuer une opération de laminage de ladite soudure, soit à appliquer une bande adhésive ou un marquage permettant de repérer la zone raboutée sur au moins une partie de ladite soudure.

Les opérations consistant à tendre l'article rabouté peuvent être réalisées par des moyens d'enroulement ou de déroulement (non représentés) présents initialement dans l'installation de déroulage, en dehors dudit module de raboutage.

L'installation reprend ensuite son cycle de déroulage normal.

L'intégration du module dans une installation déroulant, selon un chemin de déroulage, un premier article enroulé autour d'une première bobine de dévidage est relativement simple. Le module est de conception simple, sûre et rationnelle.

Avantageusement, le module de raboutage selon l'invention comprend des deuxièmes moyens de mise en tension. Ces deuxièmes moyens sont situés en aval de la station de travail, sur le chemin de déroulage de l'article rabouté, et sont aptes à effectuer une traction dudit article rabouté dans le sens de son déroulement.

De cette manière l'étape de mise en tension du procédé de raboutage, qui fait suite à l'opération de raboutage en tant que telle, en vue du laminage de la soudure, est réalisée par ces deuxièmes moyens de mises en tension. En effet, utiliser les moyens de déroulage de l'installation de déroulage proprement dite pour effectuer cette opération n'est pas toujours satisfaisant. Le couple desdits moyens de déroulage est souvent assez important pour être difficilement manoeuvrable à faible vitesse. La mise en tension de l'article rabouté doit effectivement être effectuée minutieusement et à faible vitesse pour déplacer correctement sous la station de travail la soudure résultant du raboutage. Cette tension doit simplement déplacer la soudure, au bon endroit, sans jouer sur l'élasticité de l'article rabouté au risque de ne pas positionner correctement la soudure, ou bien de la dégrader ou encore la rompre. Les deuxièmes moyens de mise en tension permettent d'effectuer correctement cette opération.

Selon une forme de réalisation particulière, lesdits deuxièmes moyens de mise en tension se présentent sous la forme d'un jeu d'au moins trois rouleaux de renvoi, consécutifs par rapport aux sens de déroulement de l'article rabouté issu de la station de travail. Les deux rouleaux d'extrémités sont disposés d'un côté dudit article rabouté, tandis que le rouleau central est disposé de l'autre côté dudit article rabouté. Le rouleau central est déplaçable orthogonalement par rapport au plan de l'article rabouté, entre les deux autres rouleaux d'extrémités, de manière à tirer sur ledit article rabouté pour le mettre en tension.

Selon une forme de réalisation particulière, les premiers moyens de mise en tension du second article issu de la deuxième bobine de dévidage ne sont pas initialement situés dans le plan de raboutage et sont montés mobiles avec le premier rouleau de renvoi, et parallèlement à celui-ci.

De cette manière, afin de réaliser l'étape consistant à déplacer un tronçon du second article dans un plan de raboutage situé hors du chemin de déroulage du premier article, le premier rouleau de renvoi, et les premiers moyens de mise en tension, se déplacent simultanément et parallèlement pour se positionner dans ledit plan de raboutage.

Selon une autre caractéristique de l'invention, les moyens de coupage-soudage comprennent :
- deux organes d'appui en regard et agencés de part et d'autre du plan de raboutage, chacun des deux organes d'appui est divisé en deux sous-organes d'appui en regard l'un de l'autre et agencés de part et d'autre d'un plan de coupage-soudage transversal orthogonal au plan de raboutage, lesdits deux organes d'appui étant déplaçables transversalement par rapport aux tronçons des deux articles, et,
- un outil de coupage-soudage monté mobile par rapport aux organes d'appui et transversalement par rapport aux tronçons des deux articles.

Le module de raboutage selon l'invention peut mettre en oeuvre tout type d'outil de coupage-soudage ou tout type de moyen de laminage, tels que par exemple des outils de coupage-soudage et des moyens de laminage à ultrasons.

En ce qui concerne l'outil de coupage-soudage, plusieurs formes de réalisation différentes peuvent être envisagées. En effet, l'outil de coupage-soudage peut comprendre une lame de coupe pour réaliser une coupe mécanique par écrasement en combinaison avec un organe de contre-appui, et une sonotrode pour réaliser un soudage par ultrasons par laminage en combinaison avec un organe de contre-appui.

L'outil de coupage-soudage peut également comprendre une sonotrode équipée d'une lame de coupe et de moyens de laminage pour réaliser respectivement une coupe par ultrasons, en combinaison avec un organe de contre-appui, et un soudage par ultrasons, en combinaison avec un organe de contre-appui.

L'outil de coupage-soudage peut encore comprendre une sonotrode équipée de moyens de laminage pour réaliser un soudage par ultrasons, en combinaison avec un organe de contre-appui, et une coupe par ultrasons, en combinaison avec un organe de contre-appui qui comprend, à cet effet, une arête tranchante.

De préférence, et pour permettre la réversibilité du procédé de raboutage, c'est-à-dire pour permettre de réaliser en continu plusieurs cycles de raboutage, le module comprend :
- des troisièmes moyens de mise en tension d'un premier article issu d'une première bobine de bobine de dévidage, lesdits troisièmes moyens étant situés dans le plan de raboutage situé hors du chemin de déroulage du second article ;
- un quatrième rouleau de renvoi apte à renvoyer le premier article tendu vers les troisièmes moyens de mise en tension, ledit quatrième rouleau de renvoi étant déplaçable entre une position de repos, et une position de raboutage dans laquelle il est apte à positionner un tronçon tendu du premier article dans le plan de raboutage, ledit tronçon étant situé entre ledit quatrième rouleau de renvoi et lesdits troisièmes moyens de mise en tension ;
- un cinquième rouleau de renvoi apte à renvoyer le second article issu de la deuxième bobine de dévidage vers le deuxième rouleau de renvoi, ledit cinquième rouleau de renvoi étant disposé du même côté du plan de raboutage, et du même côté du second article par rapport audit deuxième rouleau de renvoi, ledit cinquième rouleau étant déplaçable entre une position initiale, et une position de raboutage dans laquelle il est situé au niveau du plan de raboutage, entre le quatrième rouleau de renvoi dans sa position de raboutage et les troisièmes moyens de mise en tension dudit premier article, de manière à permettre le positionnement d'un tronçon du second article en regard, face à face et bord à bord, avec le tronçon du premier article lorsque le quatrième rouleau est dans la position de raboutage.

Ces caractéristiques permettent au module de raboutage selon l'invention d'enchainer en continu plusieurs cycles de raboutage. En effet, l'installation est approvisionnée, en temps masqué sur le déroulage du second article, d'une manière automatique ou par le biais d'un opérateur, avec une autre première bobine, et l'extrémité initiale de cette première bobine est fixée aux troisièmes moyens de mise en tension qui sont situés dans le plan de raboutage situé hors du chemin de déroulage du premier article.

Le premier article est donc tendu et est positionné sur un quatrième rouleau de renvoi en aval desdits troisièmes moyens de mise en tension.

Le module permet alors le positionnement d'un tronçon du premier article dans le plan de raboutage, par le déplacement du quatrième rouleau de renvoi jusqu'à sa position de raboutage. Lors de cette étape, le déroulage du second article est toujours en cours.

A cette étape, le cinquième rouleau de renvoi se déplace afin de mettre un tronçon du second article dans le plan de raboutage en regard, face à face et bord à bord, avec le tronçon du premier article. Lors de cette étape, le déroulage du second article est toujours en cours.

Les moyens de coupage-soudage se déplacent ensuite vers leur position de coupage-soudage, et c'est seulement lorsque lesdits moyens de coupage-soudage viennent mettre en contact les deux articles face à face et bord à bord, que le déroulage du second article est stoppé. Les deux articles en contact face à face et bord à bord sont ensuite coupés-soudés pour être raboutés.

Les étapes suivantes sont les mêmes que pour le premier cycle de raboutage.

De la même manière que précédemment, et selon une forme de réalisation particulière, les troisièmes moyens de mise en tension du premier article issu de la première bobine de dévidage ne sont pas initialement situés dans le plan de raboutage, et sont montés mobiles avec le quatrième rouleau de renvoi, et parallèlement à celui-ci.

### BREVE DESCRIPTION DES DESSINS

D'autres caractéristiques et avantages de l'invention ressortiront clairement de la description qui en est réalisée ci-après, à titre indicatif et nullement limitatif, en référence aux figures annexées dans lesquelles :
- les figures 1 à 14 sont des représentations schématiques successives en vue de côté d'un module de raboutage selon l'invention, lesdites figures illustrant les étapes du procédé de deux cycles de raboutage ;
- la figure 1 illustre l'étape consistant à approvisionner l'installation avec une deuxième bobine de dévidage autour de laquelle est enroulé un second article ;
- la figure 2 illustre l'étape consistant à déplacer automatiquement un tronçon tendu du second article jusque dans un plan de raboutage situé hors du chemin de déroulage du premier article ;
- la figure 3 illustre l'étape consistant à déplacer automatiquement un tronçon tendu du premier article jusqu'au niveau du plan de raboutage, et de sorte à mettre en regard, face contre face et bord à bord, le tronçon du premier article avec le tronçon du second article ;
- la figure 4 illustre l'étape consistant à mettre automatiquement en contact bord à bord les deux tronçons, et à réaliser automatiquement un coupage-soudage transversal des deux tronçons pour réaliser l'opération de raboutage en tant que telle ;
- la figure 5 illustre l'étape consistant à mettre automatiquement en tension l'article rabouté issu de la deuxième bobine de dévidage en tirant sur ledit article, en aval de la soudure résultant du raboutage, de manière à déplacer ladite soudure vers une station de travail ;
- la figure 6 illustre l'étape consistant à laminer automatiquement la soudure dudit article rabouté issu de la deuxième bobine de dévidage ;
- la figure 7 illustre le cycle de déroulage de la deuxième bobine de dévidage ;
- la figure 8 illustre un second cycle de raboutage, c'est-à-dire que la deuxième bobine de dévidage est sur le point d'être totalement vide, ladite figure illustrant l'étape consistant à approvisionner l'installation avec une autre première bobine de dévidage autour de laquelle est enroulé un autre premier article ;
- la figure 9 illustre l'étape consistant à déplacer automatiquement un tronçon tendu du premier article jusque dans un plan de raboutage situé hors du chemin de déroulage du second article ;
- la figure 10 illustre l'étape consistant à déplacer automatiquement un tronçon tendu du second article jusqu'au niveau du plan de raboutage, et de sorte à mettre en regard, face contre face et bord à bord, le tronçon du second article avec le tronçon du premier article ;
- la figure 11 illustre l'étape consistant à mettre automatiquement en contact bord à bord les deux tronçons, et à réaliser automatiquement un coupage-soudage transversal des deux tronçons pour réaliser l'opération de raboutage en tant que telle ;
- la figure 12 illustre l'étape consistant à mettre automatiquement en tension l'article rabouté issu de la première bobine de dévidage en tirant sur ledit article, en aval de la soudure résultant du raboutage, de manière à déplacer ladite soudure vers une station de travail ;
- la figure 13 illustre l'étape consistant à laminer automatiquement la soudure dudit article rabouté issu de la première bobine de dévidage ;
- la figure 14 illustre le cycle de déroulage de la première bobine de dévidage.
- les figures 15 à 18 des représentations schématiques successives illustrant en détail l'étape consistant à mettre automatiquement en contact bord à bord les deux tronçons, et à réaliser automatiquement un coupage-soudage transversal des deux tronçons pour réaliser l'opération de raboutage en tant que telle ;

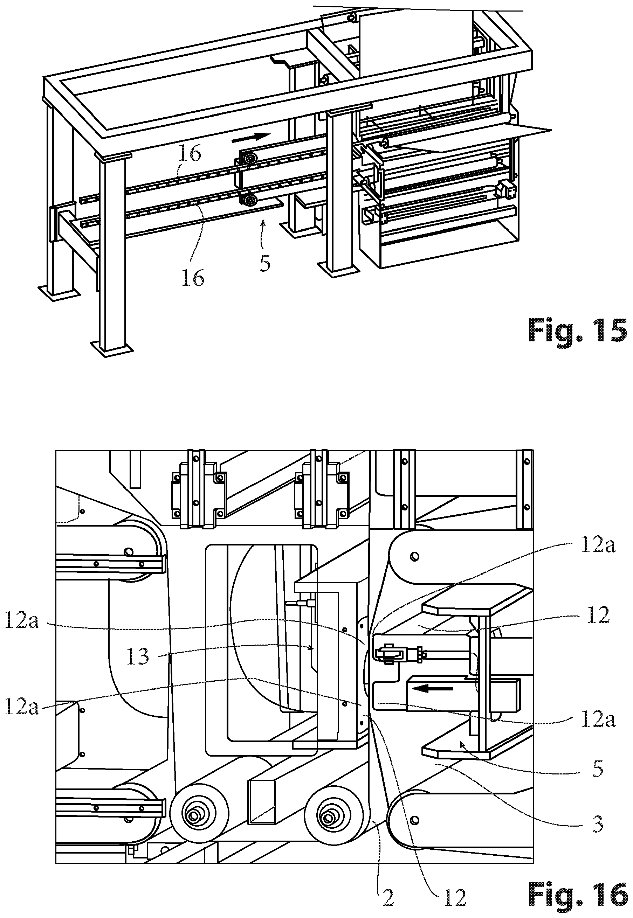

- la figure 15 est une vue schématique en perspective illustrant les moyens de coupage-soudage se déplaçant transversalement par rapport aux tronçons jusqu'à une position de coupage-soudage ;
- la figure 16 est une vue schématique en perspective illustrant les organes d'appui en contact pour mettre en contact bord à bord les deux tronçons à rabouter ;

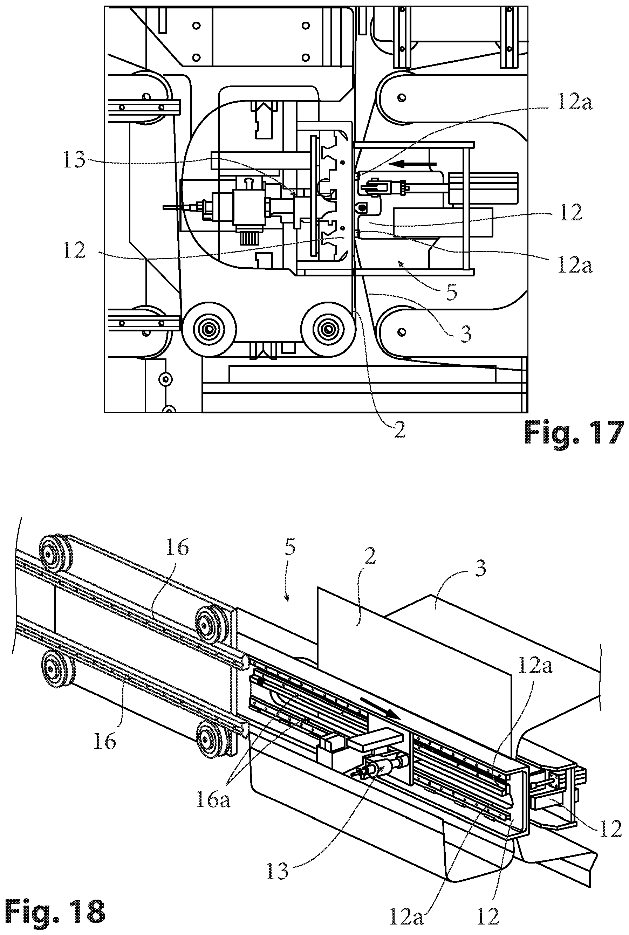

- la figure 17 est une vue similaire à celle de la figure 16, représentée sous un autre angle, notamment en coupe longitudinale par rapport aux articles à rabouter ;
- la figure 18 est une vue schématique en perspective illustrant le déplacement transversal d de l'outil de coupage-soudage pour réaliser l'opération de raboutage en tant que telle.

### EXPOSE DETAILLE DE L'INVENTION

L'invention concerne un procédé et un module (1) pour rabouter deux articles (2, 3) présentés sous forme de bandes ou de nappes. Le module (1) et le procédé de raboutage sont destinés à être mis en oeuvre dans une installation (non représentée) déroulant, selon un chemin de déroulage, un premier article (2) enroulé autour d'une première bobine de dévidage (B1). Le procédé et le module (1) selon l'invention permettent ainsi de rabouter l'extrémité finale du premier article (2) issu de la première bobine de dévidage (B1), avec l'extrémité initiale d'un second article (3) issu d'une deuxième bobine de dévidage (B2).

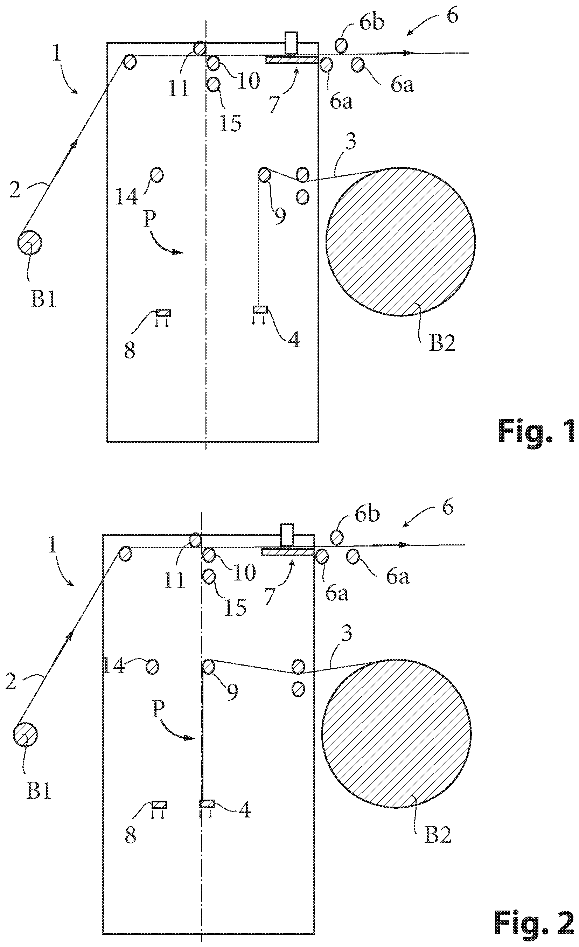

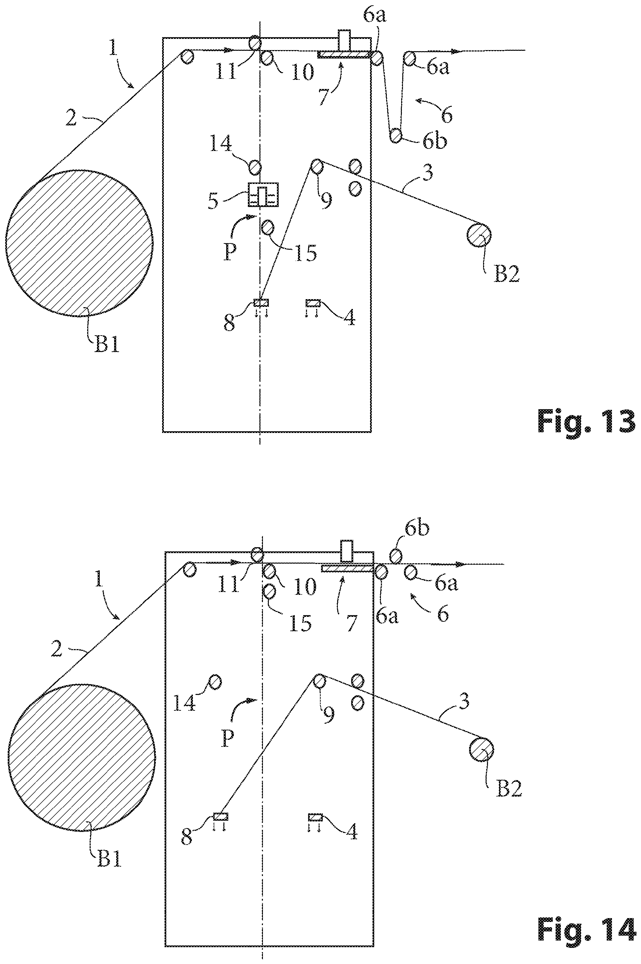

Les figures 1 à 14 illustrent le procédé de raboutage de deux cycles de raboutage. C'est-à-dire qu'une première bobine (B1) vide est raboutée à une deuxième bobine de dévidage (B2), et que ladite deuxième bobine de dévidage (B2) est ensuite raboutée à une autre première bobine de dévidage (B1). Sur ces figures 1 à 14 il est illustré une simple partie de l'installation de déroulage résumée uniquement aux deux bobines de dévidage (B1, B2) susmentionnées.

L'invention concerne essentiellement le procédé de raboutage et le module (1) pour la mise en oeuvre dudit procédé.

En référence aux figures 1 à 14 illustrant une succession de vues schématiques de côté du module (1) selon l'invention, celui-ci comprend des premiers moyens (4) de mise en tension du second article (3) issu de la deuxième bobine de dévidage (B2), une pluralité de rouleaux de renvoi aptes à renvoyer le premier article (2) ou le second article (3), des moyens de coupage-soudage (5) aptes à réaliser l'opération de raboutage en tant que telle, des deuxièmes moyens (6) de mise en tension pour déplacer la soudure résultant du raboutage vers une station de travail (7), et des troisièmes moyens (8) de mise en tension d'un autre premier article (2) issu d'une autre première bobine de dévidage (B1).

Plus précisément, le module (1) comprend un premier rouleau de renvoi (9), situé en aval des premiers moyens (4) de mise en tension par rapport au sens de déroulement du second article (3). Le premier rouleau (9) est apte à renvoyer le second article (3) vers les premiers moyens (4) de mise en tension.

Le premier rouleau de renvoi (9) et lesdits premiers moyens (4) de mise en tension forment un plan. Ces premiers moyens (4) de mise en tension et ce premier rouleau de renvoi (9) sont déplaçables entre une première position de repos, et une deuxième position de raboutage dans laquelle ils positionnent un tronçon du second article (3) dans un plan de raboutage (P). Le tronçon du second article (3) est celui situé naturellement entre lesdits premiers moyens (4) de mise en tension et le premier rouleau de renvoi (9).

Les premiers moyens (4) de mise en tension sont de tout type approprié, aptes à effectuer une traction sur l'extrémité libre du second article (3). Lesdits premiers moyens (4) de mise en tension et ledit premier rouleau de renvoi (9) sont déplaçables par tout moyen approprié. Ils sont par exemple montés sur des rails dans lesquels ils peuvent coulisser d'une manière guidée et contrôlée. Les premiers moyens (4) de mise en tension et le premier rouleau (9) sont déplaçables simultanément et parallèlement l'un à l'autre jusqu'au plan de raboutage (P).

Le module (1) comprend en outre un deuxième rouleau de renvoi (10) apte à renvoyer le premier article (2) issu de la première bobine de dévidage (B1) vers la station de travail (7). Ce deuxième rouleau (10) est disposé sur le chemin de déroulage du premier article (2) et au niveau du plan de raboutage (P), du même côté que le premier rouleau de renvoi (9). Par « au niveau du plan de raboutage (P) », on entend que le deuxième rouleau (10) est suffisamment proche dudit plan de raboutage (P) pour permettre le renvoi ultérieur d'un article dans ledit plan de raboutage (P). Le deuxième rouleau (10) peut idéalement être tangent audit plan de raboutage (P), mais il peut également être légèrement éloigné de celui-ci.

Le module (1) comprend ensuite un troisième rouleau de renvoi (11) apte à renvoyer le premier article (2) issu de la première bobine de dévidage (B1) vers le deuxième rouleau de renvoi (10). Ce troisième rouleau de renvoi (11) est disposé de l'autre côté du plan de raboutage (P), et de l'autre côté du premier article (2) par rapport audit deuxième rouleau de renvoi (10). Ce troisième rouleau (11) est déplaçable entre une position initiale, et une position de raboutage dans laquelle il est situé au niveau du plan de raboutage (P), entre le premier rouleau de renvoi (9) dans sa position de raboutage et les premiers moyens (4) de mise en tension dudit second article (3). Le déplacement du troisième rouleau (11) est réalisé de toute manière appropriée, par exemple de la même manière que pour le premier rouleau (9), c'est-à-dire aux moyens de rails. Le déplacement dudit troisième rouleau (11), en combinaison avec le deuxième rouleau (10) qui demeure fixe entraine le positionnement du tronçon du premier article (2), situé entre ledit troisième rouleau (11) et le deuxième rouleau de renvoi (10), à proximité du plan de raboutage (P), et sensiblement parallèlement à celui-ci. Le tronçon du premier article (2) se retrouve notamment en regard, face à face et bord à bord, avec le tronçon du second article (3) lorsque le premier rouleau (9) est dans la position de raboutage.

Le module (1) comprend des moyens de coupage-soudage (5) déplaçables transversalement dans le plan de raboutage (P), entre une position de repos, et une position de coupage-soudage (voir figure 15). Ces moyens de coupage-soudage (5) sont par exemple montés sur des rails (16) pour leur coulissement à partir de la position de repos dans laquelle ils ne sont pas en regard des tronçons, jusqu'à la position de coupage-soudage dans laquelle ils enserrent lesdits tronçons. Le déplacement jusqu'à la position de coupage-soudage se fait de préférence transversalement par rapport aux tronçons à rabouter. Dans la position de coupage-soudage, lesdits moyens de coupage-soudage (5) sont aptes à mettre en contact bord à bord les deux tronçons, et à réaliser un coupage-soudage transversal desdits deux tronçons pour réaliser l'opération de raboutage en tant que telle.

En référence aux figures 15 à 18, ces moyens de coupage-soudage (5) comprennent deux organes d'appui (12) en regard et agencés de part et d'autre du plan de raboutage (P). Chacun des deux organes d'appui (12) est divisé en deux sous-organes d'appui (12a) en regard l'un de l'autre et agencés de part et d'autre d'un plan de coupage-soudage transversal orthogonal au plan de raboutage (P).

En référence à la figure 15, les deux organes d'appui (12) sont donc déplaçables transversalement par rapport aux tronçons des deux articles (2, 3) pour adopter la position de coupage-soudage. Ensuite, en référence aux figures 16 et 17, l'un des organes d'appui (12) est déplaçable vers l'autre pour pousser les deux tronçons et les mettre en contact bord à bord.

Les moyens de coupage-soudage (5) comprennent un outil de coupage-soudage (13) bien connu de l'état de la technique, notamment à ultrasons par exemple. En référence à la figure 18, cet outil de coupage-soudage (13) est monté mobile par rapport aux organes d'appui (12) et transversalement par rapport aux tronçons des deux articles (2, 3), de manière à permettre le coupage-soudage transversal desdits deux tronçons pour réaliser l'opération de raboutage en tant que telle. De la même manière, le déplacement des organes d'appui (12) ou de l'outil de coupage-soudage (13) peut se faire de toute manière appropriée, notamment par l'intermédiaire de rails (16a).

Le module de raboutage (1) comprend ensuite des deuxièmes moyens (6) de mise en tension, situés en aval de la station de travail (7) et sur le chemin de déroulage de l'article rabouté. Ces deuxièmes moyens (6) de mise en tension sont aptes à effectuer une traction dudit article rabouté dans le sens de son déroulement afin de déplacer la soudure résultant du raboutage vers la station de travail (7).

Ces deuxièmes moyens (6) de mise en tension se présentent sous la forme d'un jeu d'au moins trois rouleaux de renvoi, consécutifs par rapport aux sens de déroulement de l'article rabouté issu de la station de travail (7). Ce jeu de rouleaux présente deux rouleaux d'extrémités (6a) disposés d'un côté dudit article rabouté, et un rouleau central (6b) disposé de l'autre côté dudit article rabouté. Le rouleau central (6b) est déplaçable, par tout moyen, orthogonalement par rapport au plan de l'article rabouté, et entre les deux autres rouleaux d'extrémités (6a). De cette manière, le déplacement du rouleau central (6b) permet de tirer sur ledit article rabouté pour le mettre en tension et ainsi de déplacer la soudure vers la station de travail (7).

La station de travail (7) est bien connue de l'état de la technique et permet soit de réaliser un laminage de la soudure résultant du raboutage, soit d'appliquer une bande adhésive de tout type ou un marquage permettant de repérer la zone raboutée sur au moins une partie de ladite soudure. Ce laminage de préférence réalisé par écrasement et par l'intermédiaire de moyens de laminage à ultrasons. La bande adhésive permet un repérage visuel de la soudure, et/ou un renforcement de ladite soudure.

Pour la réversibilité du procédé de raboutage et pour permettre au module (1) d'enchainer en continu plusieurs cycles de raboutage, celui-ci comprend des troisièmes moyens (8) de mise en tension d'un autre premier article (2) issu d'une autre première bobine de dévidage (B1) et un quatrième rouleau de renvoi (14).

Plus précisément, le quatrième rouleau de renvoi (14) est situé en aval des troisièmes moyens (8) de mise en tension par rapport au sens de déroulement du premier article (2). Le quatrième rouleau (14) est apte à renvoyer le premier article (2) vers les troisièmes moyens (8) de mise en tension.

De la même manière que précédemment, le quatrième rouleau de renvoi (14) et lesdits troisièmes moyens (8) de mise en tension forment un plan. Ces troisièmes moyens (8) de mise en tension et ce quatrième rouleau de renvoi (14) sont déplaçables entre une première position de repos, et une deuxième position de raboutage dans laquelle ils positionnent un tronçon du premier article (2) dans le plan de raboutage (P). Le tronçon du premier article (2) est celui situé naturellement entre lesdits troisièmes moyens (8) de mise en tension et le quatrième rouleau de renvoi (14).

Les troisièmes moyens (8) de mise en tension sont similaires aux premiers moyens (4) de mise en tension et sont aptes à effectuer une traction sur l'extrémité libre du premier article (2). Les troisièmes moyens (8) de mise en tension et le quatrième rouleau (14) sont déplaçables simultanément et parallèlement l'un à l'autre jusqu'au plan de raboutage (P).

Le module (1) comprend ensuite un cinquième rouleau de renvoi (15) apte à renvoyer le second article (3) issu de la deuxième bobine (B2) de dévidage vers le deuxième rouleau de renvoi (10). Ce cinquième rouleau de renvoi (15) est similaire en termes de fonctions au troisième rouleau de renvoi (11) du module (1). Ce cinquième rouleau de renvoi (15) est disposé du même côté du plan de raboutage (P), et du même côté du second article (3) par rapport audit deuxième rouleau de renvoi (10). Ce cinquième rouleau (15) est déplaçable entre une position initiale, et une position de raboutage dans laquelle il est situé au niveau du plan de raboutage (P), entre le quatrième rouleau de renvoi (14) dans sa position de raboutage et les troisièmes moyens (8) de mise en tension dudit premier article (2). Le déplacement dudit cinquième rouleau (15), en combinaison avec le deuxième rouleau (10) qui demeure fixe, entraine le positionnement du tronçon du second article (3), situé entre ledit cinquième rouleau (15) et le deuxième rouleau de renvoi (10), à proximité du plan de raboutage (P), et sensiblement parallèlement à celui-ci. Le tronçon du second article (3) se retrouve notamment en regard, face à face et bord à bord, avec le tronçon du premier article (2) lorsque le quatrième rouleau (14) est dans la position de raboutage.

Le module (1) permet ainsi la réalisation d'une pluralité de cycle de raboutage. En effet, lors du fonctionnement dudit module de raboutage (1), et en référence à la figure 1, l'opérateur approvisionne l'installation avec la deuxième bobine de dévidage (B2) autour de laquelle est enroulé le second article (3) à rabouter au premier article (2). Lors de cette étape, l'opérateur fixe l'extrémité initiale du second article (3) aux premiers moyens (4) de mise en tension. Ces opérations sont effectuées en temps masqué par rapport au déroulage du premier article (2), par un opérateur ou bien d'une manière totalement automatisée.

Le second article (3) est donc tendu et est positionné sur un premier rouleau de renvoi (9) disposé en aval desdits premiers moyens (4) de mise en tension. Cette étape est encore effectuée en temps masqué sur le déroulage du premier article (2).

En référence à la figure 2, le module (1) permet alors le positionnement d'un tronçon du second article (3) dans le plan de raboutage (P), par le déplacement simultanément du premier rouleau de renvoi (9) jusqu'à sa position de raboutage, et des premiers moyens (4) de mise en tension qui sont mobiles avec le premier rouleau (9) et parallèlement à celui-ci.

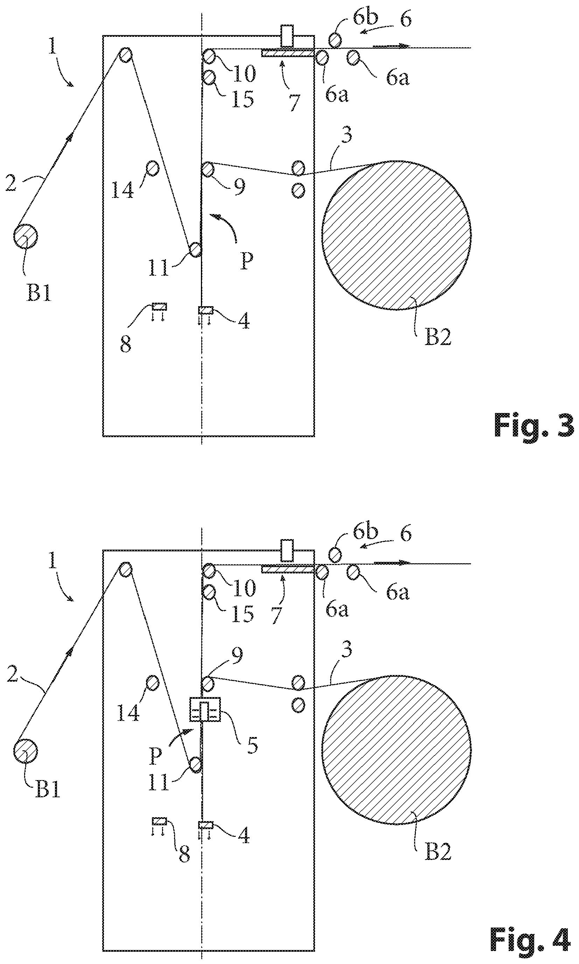

A cette étape et en référence à la figure 3, le troisième rouleau de renvoi (11) se déplace afin de mettre un tronçon du premier article (2) dans le plan de raboutage (P), en regard, face à face et bord à bord, avec le tronçon du second article (3). Cette étape est encore effectuée en temps masqué sur le déroulage du premier article (2).

En référence à la figure 4, le déroulage du premier article (2) est stoppé et les moyens de coupage-soudage (5) se déplacent ensuite pour venir mettre en contact les deux articles (2, 3) bord à bord et les couper-souder pour les rabouter.

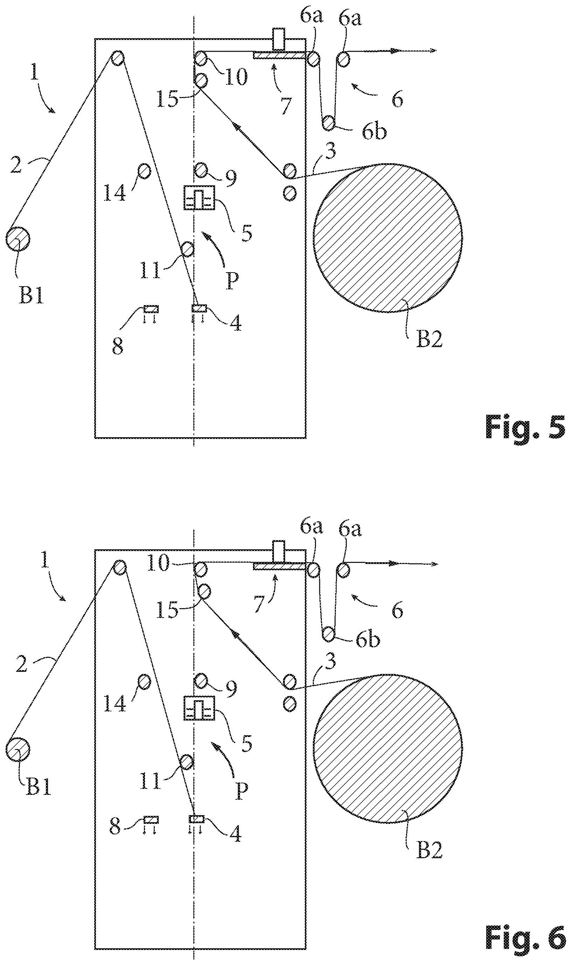

A cette étape et en référence à la figure 5, le rouleau central (6b) situé en aval de la station de travail (7) se déplace orthogonalement au plan de l'article rabouté pour le mettre en tension et ainsi déplacer la soudure résultant du raboutage vers la station de travail (7).

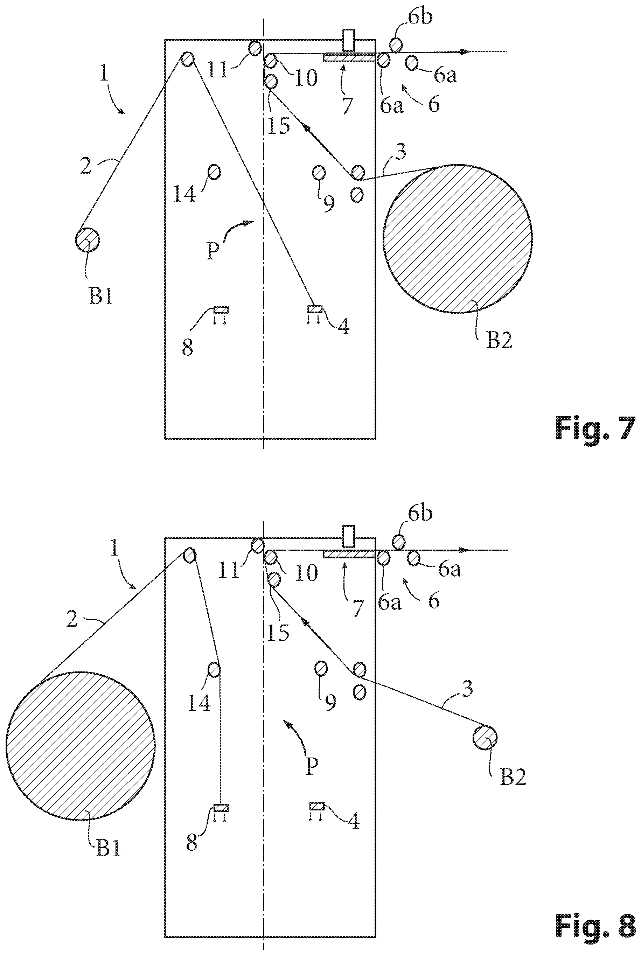

En référence à la figure 6, la station de travail (7) lamine la soudure, ou bien applique une bande adhésive ou un marquage permettant de repérer la zone raboutée sur au moins une partie de la soudure. En référence à la figure 7, le rouleau central (6b) reprend ensuite sa position initiale et l'installation reprend ensuite son cycle de déroulage normal. Il en est de même des autres rouleaux de renvois mobiles (9, 11) qui reprennent leur position initiale.

Une fois la deuxième bobine (B2) vide et en référence à la figure 8, l'opérateur approvisionne l'installation avec une autre première bobine de dévidage (B1) autour de laquelle est enroulé un autre premier article (2) à rabouter au second article (3). Lors de cette étape, l'opérateur fixe l'extrémité initiale du premier article (2) aux troisièmes moyens (8) de mise en tension. Ces opérations sont effectuées en temps masqué par rapport au déroulage du second article (3), par un opérateur ou bien d'une manière totalement automatisée.

Le premier article (2) est donc tendu et est positionné sur un quatrième rouleau de renvoi (14) en aval desdits troisièmes moyens (8) de mise en tension. Cette opération est effectuée en temps masqué sur le déroulage du second article (3).

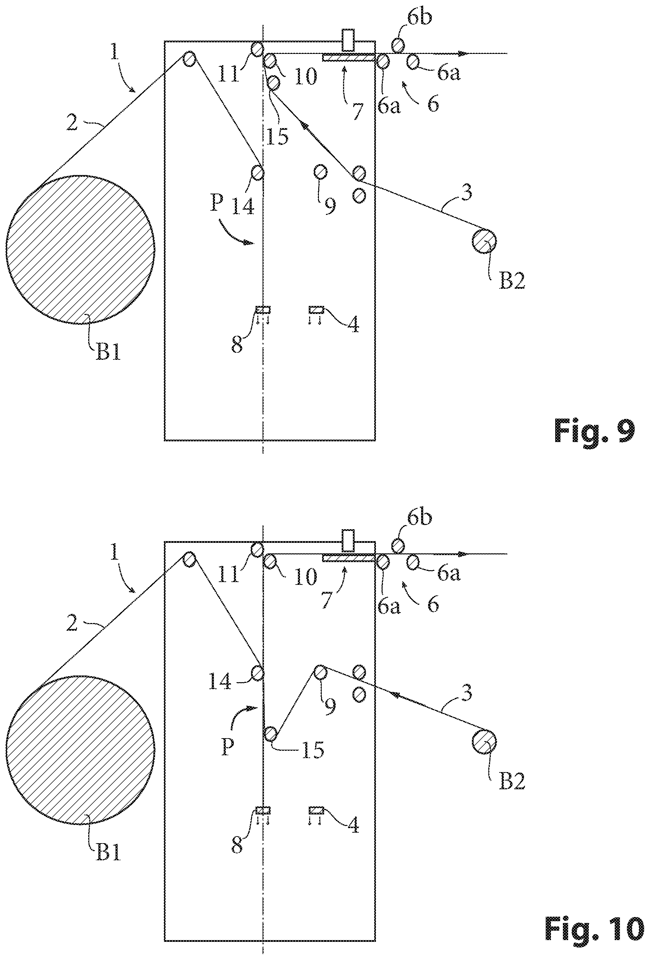

En référence à la figure 9, le module (1) permet alors le positionnement d'un tronçon du premier article (2) dans le plan de raboutage (P), par le déplacement du quatrième rouleau de renvoi (14) jusqu'à sa position de raboutage, et des troisièmes moyens (8) de mise en tension qui sont mobiles avec le quatrième rouleau (14) et parallèlement à celui-ci. Cette opération est encore effectuée en temps masqué sur le déroulage du second article (3).

A cette étape et en référence à la figure 10, le cinquième rouleau de renvoi (15) se déplace afin de mettre un tronçon du second article (3) dans le plan de raboutage (P) en regard, face à face et bord à bord, avec le tronçon du premier article (2).

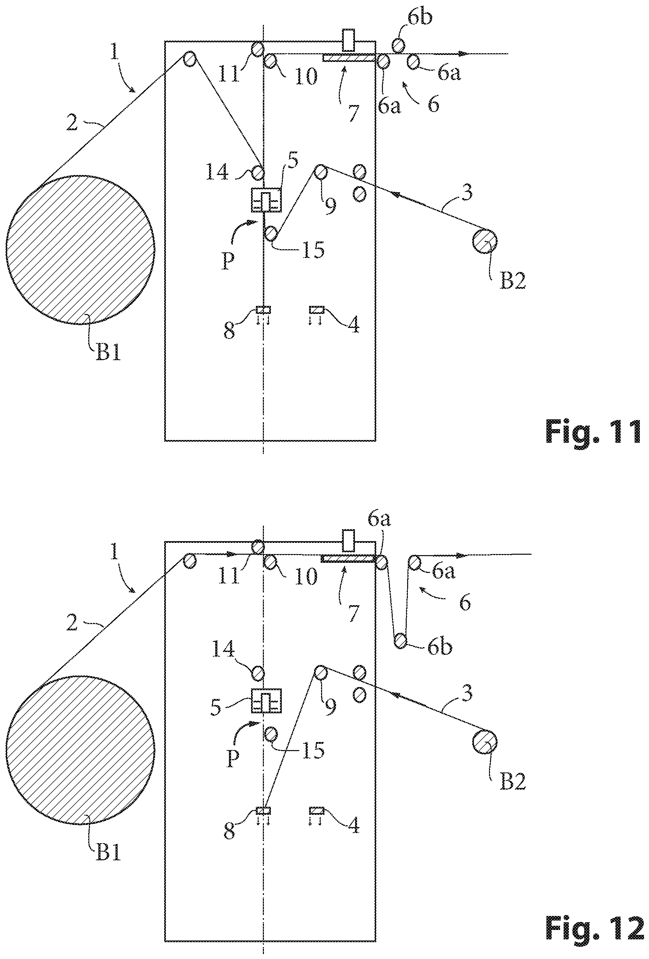

En référence à la figure 11, le déroulage du second article (3) est stoppé et les moyens de coupage-soudage (5) se déplacent ensuite pour venir mettre en contact les deux articles (2, 3) bord à bord et les couper-souder pour les rabouter.

En référence aux figures 12, 13, et 14, les étapes suivantes sont les mêmes que pour le premier cycle de raboutage illustré aux figures 5, 6 et 7. Après le cycle de raboutage, les rouleaux mobiles (14, 15) reprennent leur position initiale.

Il est bien évident que dans le module de raboutage (1) décrit ci-dessus, tous les rouleaux de renvoi sont dans un même plan et leurs axes de révolution sont parallèles les uns aux autres.

Comme il ressort de ce qui précède, l'invention fournit un procédé de raboutage et un module de raboutage (1) pour la mise en oeuvre du procédé qui est plus efficace que celui de l'état de la technique en termes de rapidité, de sécurité et de rendement. Le procédé ne nécessite que très peu, voire pas du tout l'intervention d'un opérateur. Le procédé de raboutage permet d'effectuer en continu plusieurs cycles de raboutage.

## Revendications

1. Procédé de raboutage de deux articles (2, 3) thermofusibles présentés sous forme de bandes ou de nappes, ledit procédé étant mis en oeuvre dans une installation déroulant, selon un chemin de déroulage, un premier article (2) enroulé autour d'une première bobine de dévidage (B1), ***caractérisé* en ce qu'**il comprend au moins les étapes consistant à :
- approvisionner l'installation avec une deuxième bobine de dévidage (B2) autour de laquelle est enroulé un second article (3) ;
- déplacer automatiquement un premier rouleau de renvoi (9) pour déplacer automatiquement un tronçon tendu du second article (3) jusque dans un plan de raboutage (P) situé hors du chemin de déroulage du premier article (2), ;
- déplacer automatiquement un troisième rouleau de renvoi (11) pour déplacer automatiquement un tronçon tendu du premier article (2) jusqu'au niveau du plan de raboutage (P), et de sorte à mettre en regard, face contre face et bord à bord, le tronçon du premier article (2) avec le tronçon du second article (3) ;
- mettre automatiquement en contact bord à bord les deux tronçons, et réaliser automatiquement un coupage-soudage transversal des deux tronçons pour réaliser l'opération de raboutage en tant que telle.

2. Procédé de raboutage selon la revendication 1, ***caractérisé* en ce qu'**il comprend les étapes consistant à :
- mettre automatiquement en tension l'article rabouté issu de la deuxième bobine de dévidage (B2) en tirant sur ledit article, en aval de la soudure résultant du raboutage, de manière à déplacer ladite soudure vers une station de travail (7) ;
- laminer automatiquement la soudure dudit article rabouté issu de la deuxième bobine de dévidage (B2).

3. Procédé de raboutage selon la revendication 1, ***caractérisé* en ce qu'**il comprend les étapes consistant à :
- mettre automatiquement en tension l'article rabouté issu de la deuxième bobine de dévidage (B2) en tirant sur ledit article, en aval de la soudure résultant du raboutage, de manière à déplacer ladite soudure vers une station de travail (7) ;
- appliquer automatiquement une bande adhésive ou un marquage permettant de repérer la zone raboutée sur au moins une partie de la soudure dudit article rabouté issu de la deuxième bobine de dévidage (B2).

4. Module de raboutage (1) de deux articles (2, 3) thermofusibles présentés sous forme de bandes ou de nappes, ledit module (1) étant mis en oeuvre dans une installation déroulant, selon un chemin de déroulage, un premier article (2) enroulé autour d'une première bobine de dévidage (B1), le module comprenant au moins des premiers moyens (4) de mise en tension d'un second article (3) issu d'une deuxième bobine de dévidage (B2), lesdits premiers moyens étant situés dans un plan de raboutage (P) situé hors du chemin de déroulage du premier article (2) ***caractérisé* en ce qu'**il comprend au moins :
- un premier rouleau de renvoi (9) apte à renvoyer le second article (3) tendu vers les premiers moyens (4) de mise en tension, ledit premier rouleau de renvoi (9) étant déplaçable entre une position de repos, et une position de raboutage dans laquelle il est apte à positionner un tronçon tendu du second article (3) dans le plan de raboutage (P), ledit tronçon étant situé entre ledit premier rouleau de renvoi (9) et lesdits premiers moyens (4) de mise en tension ;
- un deuxième rouleau de renvoi (10) disposé sur le chemin de déroulage de l'installation, au niveau du plan de raboutage (P) et du même côté que le premier rouleau de renvoi (9) par rapport audit plan de raboutage (P), ledit deuxième rouleau (10) étant apte à renvoyer le premier article (2) issu de la première bobine de dévidage (B1) vers une station de travail (7) ;
- un troisième rouleau de renvoi (11) apte à renvoyer le premier article (2) issu de la première bobine de dévidage (B1) vers le deuxième rouleau de renvoi (10), ledit troisième rouleau de renvoi (11) étant disposé de l'autre côté du plan de raboutage (P), et de l'autre côté du premier article (2) par rapport audit deuxième rouleau de renvoi (10), ledit troisième rouleau (11) étant déplaçable entre une position initiale, et une position de raboutage dans laquelle il est situé au niveau du plan de raboutage (P), entre le premier rouleau de renvoi (9) dans sa position de raboutage et les premiers moyens (4) de mise en tension dudit second article (3), de manière à permettre le positionnement d'un tronçon du premier article (2) en regard, face à face et bord à bord, avec le tronçon du second article (3) lorsque le premier rouleau (9) est dans la position de raboutage ;
- des moyens de coupage-soudage (5) déplaçables dans le plan de raboutage (P), entre une position de repos, et une position de coupage-soudage dans laquelle ils sont aptes à mettre en contact bord à bord les deux tronçons, et à réaliser un coupage-soudage transversal desdits deux tronçons pour réaliser l'opération de raboutage en tant que telle ;
- une station de travail (7), apte à laminer la soudure résultant de l'opération de raboutage, ou à appliquer une bande adhésive ou un marquage permettant de repérer la zone raboutée sur au moins une partie de ladite soudure, la station de travail étant disposée en aval du deuxième rouleau de renvoi (10) sur le chemin de déroulage de l'article rabouté.

5. Module de raboutage (1) selon la revendication 4, ***caractérisé* en ce qu'**il comprend des deuxièmes moyens (6) de mise en tension, situés en aval de la station de travail (7) et sur le chemin de déroulage de l'article rabouté, lesdits deuxièmes moyens (6) de mise en tension étant aptes à effectuer une traction dudit article rabouté dans le sens de son déroulement.

6. Module de raboutage (1) selon la revendication 5, ***caractérisé* en ce que** lesdits deuxièmes moyens (6) de mise en tension se présentent sous la forme d'un jeu d'au moins trois rouleaux de renvoi, consécutifs par rapport aux sens de déroulement de l'article rabouté issu de la station de travail (7), les deux rouleaux d'extrémités (6a) sont disposés d'un côté dudit article rabouté, tandis que le rouleau central (6b) est disposé de l'autre côté dudit article rabouté, ledit rouleau central (6b) étant déplaçable orthogonalement par rapport au plan de l'article rabouté, entre les deux autres rouleaux d'extrémités (6a), de manière à tirer sur ledit article rabouté pour le mettre en tension.

7. Module de raboutage (1) selon la revendication 4, ***caractérisé* en ce que** les premiers moyens (4) de mise en tension du second article (3) issu de la deuxième bobine de dévidage (B2) ne sont pas initialement situés dans le plan de raboutage (P) et sont montés mobiles avec le premier rouleau de renvoi (9), et parallèlement à celui-ci.

8. Module de raboutage (1) selon la revendication 4, ***caractérisé* en ce que** les moyens de coupage-soudage (5) comprennent :
- deux organes d'appui (12) en regard et agencés de part et d'autre du plan de raboutage (P), chacun des deux organes d'appui (12) est divisé en deux sous-organes d'appui (12a) en regard l'un de l'autre et agencés de part et d'autre d'un plan de coupage-soudage transversal orthogonal au plan de raboutage (P), lesdits deux organes d'appui (12) étant déplaçables transversalement par rapport aux tronçons des deux articles (2, 3), et,
- un outil de coupage-soudage (13) monté mobile par rapport aux organes d'appui (12) et transversalement par rapport aux tronçons des deux articles (2, 3).

9. Module de raboutage (1) selon la revendication 4, ***caractérisé* en ce qu'**il comprend :
- des troisièmes moyens (8) de mise en tension d'un premier article (2) issu d'une première bobine (B1) de bobine de dévidage, lesdits troisièmes moyens étant situés dans le plan de raboutage (P) situé hors du chemin de déroulage du second article (3) ;
- un quatrième rouleau de renvoi (14) apte à renvoyer le premier article (2) tendu vers les troisièmes moyens (8) de mise en tension, ledit quatrième rouleau de renvoi (14) étant déplaçable entre une position de repos, et une position de raboutage dans laquelle il est apte à positionner un tronçon tendu du premier article (2) dans le plan de raboutage (P), ledit tronçon étant situé entre ledit quatrième rouleau de renvoi (14) et lesdits troisièmes moyens (8) de mise en tension ;
- un cinquième rouleau de renvoi (15) apte à renvoyer le second article (3) issu de la deuxième bobine de dévidage (B2) vers le deuxième rouleau de renvoi (10), ledit cinquième rouleau de renvoi (15) étant disposé du même côté du plan de raboutage (P), et du même côté du second article (3) par rapport audit deuxième rouleau de renvoi (10), ledit cinquième rouleau (15) étant déplaçable entre une position initiale, et une position de raboutage dans laquelle il est situé au niveau du plan de raboutage (P), entre le quatrième rouleau de renvoi (14) dans sa position de raboutage et les troisièmes moyens (8) de mise en tension dudit premier article (2), de manière à permettre le positionnement d'un tronçon du second article (3) en regard, face à face et bord à bord, avec le tronçon du premier article (2) lorsque le quatrième rouleau (14) est dans la position de raboutage.

10. Module de raboutage (1) selon la revendication 9, ***caractérisé* en ce que** les troisièmes moyens (8) de mise en tension du premier article (2) issu de la première bobine de dévidage (B1) ne sont pas initialement situés dans le plan de raboutage (P) et sont montés mobiles avec le quatrième rouleau de renvoi (14), et parallèlement à celui-ci.

## Patentansprüche

1. Verfahren zum Zusammenfügen von zwei heissschmelzenden Artikeln (2, 3) in Form von Streifen oder Matten, dieses Verfahren wird umgesetzt in einer Anlage zum Abrollen entlang einer Abrollbahn, eines ersten Artikels (2), der um eine erste Ablaufspule (B1) gewickelt ist, ***dadurch gekennzeichnet, dass*** es mindestens die Schritte umfasst, die darin bestehen:
- Bestückung der Anlage mit einer zweiten Ablaufspule (B2) um die ein zweiter Artikel (3) gewickelt ist;
- automatische Verschiebung einer ersten Umlenkwalze (9) zur automatischen Verschiebung eines gespannten Teilstücks des zweiten Artikels (3) bis in eine Verbindungsebene (P), angeordnet außerhalb der Abrollbahn des ersten Artikels (2),
- automatische Verschiebung einer dritten Umlenkwalze (11) zur automatischen Verschiebung eines gespannten Teilstücks des ersten Artikels (2), bis in Höhe der Verbindungsebene (P) und so, dass das erste Teilstück des ersten Artikels (2) und das zweite Teilstück des zweiten Artikels (3) flächig einander zugewandt und Rand gegen Rand angeordnet werden.
- automatisch Rand gegen Rand die beiden Teilstücke in Kontakt bringen und automatisch eine Schneid- Schweissoperation in Querrichtung der beiden Teilstücke durchzuführen, um die Zusammenfügeoperation als solche durchzuführen.

2. Zusammenfügeverfahren gemäß Anspruch 1, ***dadurch gekennzeichnet, dass*** es die folgenden Schritte enthält:
- den aus der zweiten Ablaufspule (B2) hervorgegangenen zusammengefügten Artikel automatisch spannen, durch Ziehen an diesem Artikel hinter der Schweißnaht, die Ergebnis der Zusammenfügung ist, so dass diese Schweißnaht zu einer Arbeitsstation (7) verschoben wird;
- automatisches Laminieren der Schweißnaht dieses aus der zweiten Ablaufspule (B2) hervorgegangenen, zusammengefügten Artikels.

3. Zusammenfügeverfahren gemäß Anspruch 1, ***dadurch gekennzeichnet, dass*** es die folgenden Schritte enthält:
- den aus der zweiten Ablaufspule (B2) hervorgegangenen zusammengefügten Artikel automatisch spannen, durch Ziehen an diesem Artikel hinter der Schweißnaht, die Ergebnis der Zusammenfügung ist, so dass diese Schweißnaht zu einer Arbeitsstation (7) verschoben wird;
- automatisch ein Klebeband oder eine Markierung aufbringen, mit dem die Verbindungszone auf mindestens einem Teil der Schweißnaht dieses aus der zweiten Ablaufspule (B2) hervorgegangenen zusammengefügten Artikels gekennzeichnet werden kann.

4. Modul zum Zusammenfügen (1) von zwei heissschmelzenden Artikeln (2, 3) in Form von Streifen oder Matten, dieses Modul (1) wird umgesetzt in einer Anlage zum Abrollen entlang einer Abrollbahn, eines ersten Artikels (2), der um eine erste Ablaufspule (B1) gewickelt ist, das Modul umfasst mindestens erste Vorrichtungen (4) zum Spannen eines zweiten Artikels (3), hervorgegangen aus der zweiten Ablaufspule (B2), diese ersten Vorrichtungen sind in einer Verbindungsebene (P) angeordnet, die außerhalb des Ablaufpfades des ersten Artikels (2) liegt, ***dadurch gekennzeichnet, dass*** es mindestens umfasst:
- eine erste Umlenkwalze (9), die in der Lage ist, den gespannten zweiten Artikel (3) zu den ersten Spannvorrichtungen (4) umzulenken, wobei diese ersten Umlenkwalze (9) zwischen einer Ruheposition und einer Verbindungsposition verschoben werden kann, in der sie in der Lage ist, ein gespanntes Teilstück des zweiten Artikels (3) in der Verbindungsebene (P) zu positionieren, dieses Teilstück befindet sich zwischen der ersten Umlenkwalze (9) und diesen ersten Spannvorrichtungen (4),
- eine zweite Umlenkwalze (10), angeordnet im Ablaufpfad der Anlage in Höhe der Verbindungsebene (P) und auf derselben Seite wie die erste Umlenkwalze (9) bezogen auf diese Verbindungsebene (P), diese zweite Umlenkwalze (10) ist in der Lage, den aus der ersten Ablaufspule (B1) hervorgegangenen ersten Artikel (2) zu einer Arbeitsstation (7) umzulenken.
- eine dritte Umlenkwalze (11), die in der Lage ist, den ersten Artikel (2), hervorgegangen aus der ersten Ablaufspule (B1) zur zweiten Umlenkwalze (10) umzulenken, diese dritte Umlenkwalze (11) ist auf der anderen Seite der Verbindungsebene (P) und auf der anderen Seite des ersten Artikels (2) bezogen auf diese zweite Umlenkwalze (10) angeordnet, diese dritte Umlenkwalze (11) ist verschiebbar zwischen einer Ausgangsposition und einer Verbindungsposition, in der sie sich in Höhe der Verbindungsebene (P) zwischen der ersten Umlenkwalze (9) in ihrer Verbindungsposition und den ersten Spannvorrichtungen (4) dieses zweiten Artikel (3) befindet, so dass die Positionierung eines Teilstücks des ersten Artikels (2), flächig einander zugewandt und Rand gegen Rand angeordnet, mit dem Teilstück des zweiten Artikels (3) möglich wird, wenn sich die ersten Umlenkwalze (9) in der Verbindungsposition befindet;
- Vorrichtungen zum Schneiden-Schweissen (5), verschiebbar in der Verbindungsebene (P) zwischen einer Ruheposition und einer Verbindungsposition, in der sie in der Lage sind, zwei Teilstücke Rand gegen Rand in Kontakt zu bringen und eine Schneid-Schweissoperation in Querrichtung der beiden Teilstücke durchzuführen, um die Zusammenfügeoperation als solche durchzuführen;
- eine Arbeitsstation (7), die in der Lage ist, die Schweißnaht, die sich aus der Verbindungsoperation ergibt, zu laminieren oder ein Klebeband oder eine Markierung aufzubringen, mit dem die Verbindungszone auf mindestens einem Teil der Schweißnaht gekennzeichnet werden kann, wobei die Arbeitsstation hinter der zweiten Umlenkwalze (10) auf dem Ablaufpfad des zusammengefügten Artikels angeordnet ist.

5. Zusammenfügemodul (1) gemäß Anspruch 4, ***dadurch gekennzeichnet, dass*** es zweite Spannvorrichtungen (6) umfasst, die hinter der Arbeitsstation (7) und auf dem Ablaufpfad des zusammengefügten Artikels angeordnet sind, diese zweiten Spannvorrichtungen (6) sind in der Lage einen Zug auf diesen zusammengefügten Artikel in der Ablaufrichtung auszuüben.

6. Zusammenfügemodul (1) gemäß Anspruch 5, ***dadurch gekennzeichnet, dass*** diese zweiten Spannvorrichtungen (6) die Form eines Sets mit mindestens drei Umlenkwalzen haben, in der Ablaufrichtung des aus der Arbeitsstation (7) hervorgegangenen, zusammengefügten Artikels aufeinander folgend, die beiden äußeren Umlenkwalzen (6a) sind auf einer Seite des zusammengefügten Artikels angeordnet, während die zentrale Umlenkwalze (6b) auf der anderen Seite des zusammengefügten Artikels angeordnet ist, wobei diese zentrale Walze (6b), bezogen auf die Ebene des zusammengefügten Artikels, zwischen den beiden Umlenkwalzen (6a), orthogonal verschiebbar ist, so dass ein Zug auf den zusammengefügten Artikel ausgeübt wird, um ihn zu spannen.

7. Zusammenfügemodul (1) gemäß Anspruch 4, ***dadurch gekennzeichnet, dass*** die ersten Spannvorrichtungen (4) dieses zweiten, aus der zweiten Ablaufspule (B2) hervorgegangenen zusammengefügten Artikels (3), am Anfang nicht in der Verbindungsebene (P) angeordnet sind und mobil mit der ersten Umlenkwalze (9) und parallel zu dieser montiert sind.

8. Zusammenfügemodul (1) gemäß Anspruch 4, ***dadurch gekennzeichnet, dass*** die Schneid-Schweiss-Vorrichtungen (5) umfassen:
- zwei Auflagevorrichtungen (12), einander gegenüberliegend angeordnet beiderseits der Verbindungsebene (P), jede der beiden Auflagevorrichtungen (12) unterteilt sich in zwei Auflage- Untergruppen (12a) einander gegenüberliegend angeordnet beiderseits der querlaufenden Schneid-Schweiss-Ebene, orthogonal zur Verbindungsebene (P), diese beiden Auflagevorrichtungen (12) sind in Querrichtung, bezogen auf die Teilstücke der beiden Artikel (2, 3) verschiebbar, und
- ein Schneid-Schweiss-Werkzeug (13) beweglich montiert bezogen auf die Auflagevorrichtungen (12) und in Querrichtung, bezogen auf die Teilstücke der beiden Artikel (2, 3).

9. Zusammenfügemodul (1) gemäß Anspruch 4, ***dadurch gekennzeichnet, dass*** es umfasst:
- dritte Spannvorrichtungen (8) des ersten Artikels (2), hervorgegangen aus einer ersten Ablaufspule (B1), diese dritten Spannvorrichtungen sind in der Verbindungsebene (P) angeordnet, die außerhalb der Abrollbahn des zweiten Artikels (3) liegt.
- eine vierte Umlenkwalze (14), die in der Lage ist, den ersten gespannten Artikel (2) zu den dritten Spannvorrichtungen (8) umzulenken, wobei diese vierte Umlenkwalze (14) zwischen einer Ruheposition und einer Verbindungsposition verschoben werden kann, in der sie in der Lage ist, ein gespanntes Teilstück des ersten Artikels (2) in der Verbindungsebene (P) zu positionieren, dieses Teilstück befindet sich zwischen der vierten Umlenkwalze (14) und diesen dritten Spannvorrichtungen (8);
- eine fünfte Umlenkwalze (15), die in der Lage ist, den zweiten gespannten Artikel (3) hervorgegangen aus der zweiten Ablaufspule (B2) zur zweiten Umlenkwalze (10) umzulenken, wobei diese fünfte Umlenkwalze (15) auf der anderen Seite der Verbindungsebene (P) und auf derselben Seite des zweiten Artikels (3), bezogen auf diese auf diese zweite Umlenkwalze (10), angeordnet ist, diese fünfte Umlenkwalze (15) ist dabei verschiebbar zwischen einer Ausgangsposition und einer Verbindungsposition, in der sie in Höhe der Verbindungsebene (P) positioniert ist, zwischen der vierten Umlenkwalze (14) in ihrer Verbindungsposition und den dritten Spannvorrichtungen (8) dieses ersten Artikels (2), so dass ein Teilstück des zweiten Artikels (3) gespannt werden kann, flächig einander zugewandt und Rand gegen Rand angeordnet, mit dem Teilstück des ersten Artikels (2), wenn sich die vierte Umlenkwalze (14) in der Verbindungsposition befindet.

10. Zusammenfügemodul (1) gemäß Anspruch 9, ***dadurch gekennzeichnet, dass*** die dritten Spannvorrichtungen (8) dieses ersten, aus der ersten Ablaufspule (B1) hervorgegangenen ersten Artikels (2), ursprünglich nicht in der Verbindungsebene (P) angeordnet sind und mobil mit der vierten Umlenkwalze (14) und parallel zu dieser montiert sind.

## Claims

1. A butt splicing method for butt splicing together two hot-melt articles (2, 3) presented in the form of strips or sheets, said method being implemented in an installation that, along an unreeling path, unreels a first article (2) wound around a first pay-out reel (B1), said method being **characterized in that** it comprises at least the steps consisting in:
- providing the installation with a second pay-out reel (B2) around which a second article (3) is wound;
- automatically moving a first deflector roller (9) for automatically moving a tensioned segment of the second article (3) into a butt splicing plane (P) situated out of the unreeling path along which the first article (2) is unreeled;
- automatically moving a third deflector roller (11) for automatically moving a tensioned segment of the first article (2) to the level of the butt splicing plane (P), and so as to bring the segment of the first article (2) into register with, face-to-face with and end-to-end with the segment of the second article (3); and
- automatically putting the two segments into end-to-end contact, and automatically cutting and bonding the two segments transversely so as to perform the butt splicing operation as such.

2. A butt splicing method according to claim 1, **characterized in that** it further comprises the steps consisting in:
- automatically tensioning the butt-spliced article coming from the second pay-out reel (B2) by pulling on said article, downstream from the bond resulting from the butt splicing, so as to move said bond towards a work station (7); and
- automatically rolling the bond of said butt spliced article coming from the second pay-out reel (B2).

3. A butt splicing method according to claim 1, **characterized in that** it further comprises the steps consisting in:
- automatically tensioning the butt-spliced article coming from the second pay-out reel (B2) by pulling on said article, downstream from the bond resulting from the butt splicing, so as to move said bond towards a work station (7); and
- automatically applying an adhesive strip or marking making it possible to identify the butt-spliced zone over at least a portion of the bond of said butt-spliced article coming from the second pay-out reel (B2).

4. A butt splicing module (1) for butt splicing together two hot-melt articles (2, 3) presented in the form of strips or sheets, said module (1) being implemented in an installation that, along an unreeling path, unreels a first article (2) wound around a first pay-out reel (B1), the module comprising at least first tensioning means (4) for tensioning a second article (3) coming from a second pay-out reel (B2), said first tensioning means being situated in a butt splicing plane (P) situated out of the unreeling path along which the first article (2) is unreeled, said butt splicing module being **characterized in that** it further comprises at least:
- a first deflector roller (9) suitable for deflecting the second article (3) as tensioned towards the first tensioning means (4), said first deflector roller (9) being movable between a rest position and a butt splicing position, in which it is suitable for positioning a tensioned segment of the second article (3) in the butt splicing plane (P), said segment being situated between said first deflector roller (9) and said first tensioning means (4);
- a second deflector roller (10) disposed in the unreeling path of the installation, at the level of the butt splicing plane (P) and on the same side of said butt splicing plane (P) as the first deflector roller (9), said second deflector roller (10) being suitable for deflecting the first article (2) coming from the first pay-out reel (B1) towards a work station (7);
- a third deflector roller (11) suitable for deflecting the first article (2) coming from the first pay-out reel (B1) towards the second deflector roller (10), said third deflector roller (11) being disposed on the other side of the butt splicing plane (P), and on the other side of the first article (2) relative to said second deflector roller (10), said third roller (11) being movable between an initial position and a butt splicing position, in which it is situated at the level of the butt splicing plane (P), between the first deflector roller (9) in its butt splicing position and the first tensioning means (4) for tensioning said second article (3), in such a manner as to make it possible to position a segment of the first article (2) in register with, face-to-face with and end-to-end with the segment of the second article (3) when the first roller (9) is in the butt splicing position;
- cutting and bonding means (5) that are movable in the butt splicing plane (P) between a rest position and a cutting and bonding position, in which they are suitable for putting the two segments into contact with each other end-to-end, and for performing transverse cutting and bonding of said two segments for performing the butt splicing operation as such; and
- a work station (7) suitable for rolling the bond resulting from the butt splicing operation, or for applying an adhesive strip or marking making it possible to identify the butt-spliced zone over at least a portion of said bond, the work station being disposed downstream from the second deflector roller (10) in the unreeling path along which the butt-spliced article is unreeled.

5. A butt splicing module (1) according to claim 4, **characterized in that** it further comprises second tensioning means (6) situated downstream from the work station (7) and in the unreeling path along which the butt-spliced article is unreeled, said second tensioning means (6) being suitable for applying traction to said butt-spliced article in the direction in which it is unreeled.

6. A butt splicing module (1) according to claim 5, **characterized in that** said second tensioning means (6) are in the form of a set of at least three deflector rollers that are disposed consecutively relative to the direction of unreeling of the butt-spliced article coming from the work station (7), the two end rollers (6a) are disposed on one side of said butt-spliced article, while the central roller (6b) is disposed on the other side of said butt-spliced article, said central roller (6b) being movable orthogonally relative to the plane of the butt spliced article, between the other two end rollers (6a), in such a manner as to pull on said butt-spliced article so as to put it under tension.

7. A butt splicing module (1) according to claim 4, **characterized in that** the first tensioning means (4) for tensioning the second article (3) coming from the second pay-out reel (B2) are not initially situated in the butt-splicing plane (P) and are mounted to move with the first deflector roller (9), and parallel thereto.

8. A butt splicing module (1) according to claim 4, **characterized in that** the cutting and bonding means (5) comprise:
- two abutment members (12) facing each other and arranged on either side of the butt splicing plane (P), each of the two abutment members (12) being subdivided into two sub abutment members (12a) facing each other and arranged on either side of a transverse cutting and bonding plane that is orthogonal to the butt splicing plane (P), said two abutment members (12) being movable transversely relative to the segments of the two articles (2, 3); and
- a cutting and bonding tool (13) mounted to move relative to the abutment members (12) and transversely relative to the two articles (2, 3).

9. A butt splicing module (1) according to claim 4, **characterized in that** it further comprises:
- third tensioning means (8) for tensioning a first article (2) coming from a first pay-out reel (B1), said third tensioning means being situated in a butt splicing plane (P) situated out of the unreeling path along which the second article (3) is unreeled;
- a fourth deflector roller (14) suitable for deflecting the first article (2) as tensioned towards the third tensioning means (8), said fourth deflector roller (14) being mounted to move between a rest position and a butt splicing position, in which it is suitable for positioning a tensioned segment of the first article (2) in the butt splicing plane (P), said segment being situated between said fourth deflector roller (14) and said third tensioning means (8); and
- a fifth deflector roller (15) suitable for deflecting the second article (3) coming from the second pay-out reel (B2) towards the second deflector roller (10), said fifth deflector roller (15) being disposed on the same side of the butt splicing plane (P), and on the same side of the first article (3) relative to said second deflector roller (10), said fifth roller (15) being movable between an initial position and a butt splicing position, in which it is situated at the level of the butt spicing plane (P), between the fourth deflector roller (14) in its butt splicing position and the third tensioning means (8) for tensioning said first article (2), in such a manner as to make it possible to position a segment of the second article (3) in register with, face-to-face with and end-to-end with the segment of the first article (2) when the fourth roller (14) is in the butt splicing position.

10. A butt splicing module (1) according to claim 9, **characterized in that** the third tensioning means (8) for tensioning the first article (2) coming from the second pay-out reel (B1) are not initially situated in the butt-splicing plane (P) and are mounted to move with the fourth deflector roller (14), and parallel thereto.
